(19) Europäisches Patentamt
European Patent Office
Office européen des brevets

(11) Veröffentlichungsnummer: **0 073 022**
**B1**

(12) # EUROPÄISCHE PATENTSCHRIFT

(45) Veröffentlichungstag der Patentschrift: **02.10.85**

(21) Anmeldenummer: **82107567.8**

(22) Anmeldetag: **19.08.82**

(51) Int. Cl.[4]: **C 07 C 69/76,** C 07 C 67/08, C 08 F 8/14, C 08 F 20/28, C 08 G 59/42

(54) **Esterverbindungen, Verfahren zu deren Herstellung und deren Verwendung als Härter.**

(30) Priorität: **22.08.81 DE 3133295**

(43) Veröffentlichungstag der Anmeldung: **02.03.83 Patentblatt 83/9**

(45) Bekanntmachung des Hinweises auf die Patenterteilung: **02.10.85 Patentblatt 85/40**

(84) Benannte Vertragsstaaten: **AT CH DE GB LI NL**

(56) Entgegenhaltungen:
**BE - A - 663 818**
**DE - A - 2 723 492**
**DE - A - 2 749 799**
**US - A - 3 182 074**

(73) Patentinhaber: **HOECHST AKTIENGESELLSCHAFT, Postfach 80 03 20, D-6230 Frankfurt am Main 80 (DE)**

(72) Erfinder: **Just, Christoph, Dr., Akazienweg 8, D-6272 Niedernhausen/Taunus (DE)**
Erfinder: **Kraft, Kurt, Im Hopfengarten 16, D-6200 Wiesbaden (DE)**

**EP 0 073 022 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es sind schon Polyesteranhydride bekannt (US-PS 3 182 074), die durch Umsetzung von Polyhydroxyverbindungen mit Tricarbonsäureanhydriden erhalten worden sind und in denen die Estergruppen an einen polyfunktionellen aromatischen, alicyclischen, aliphatischen oder heterocyclischen Rest, der auch verzweigt sein kann, gebunden sind. Sofern der polyfunktionelle Rest aliphatischer Natur ist, kann er bis zu 32 C-Atome enthalten und die OH-Gruppen sind dabei nicht endständig angeordnet. Falls er verzweigt ist, leitet er sich nach dieser Veröffentlichung ausschließlich von monomeren mehrwertigen Alkoholen, wie Glycerin, Trimethyloläthan oder Pentaerythrit ab. Ferner ist es bekannt, Polybutadienglykol, also ein Polybutadien mit nur zwei endständigen OH-Gruppen, mit Trimellithsäureanhydrid zu verestern. Dieses Produkt wird als Härter für Epoxydharze eingesetzt. Da es nur zwei Anhydridgruppen hat, erzielt es als Härter keine hohe Vernetzungsdichte in dem zu härtenden Harz.

Eine weitere Druckschrift beschreibt die Umsetzung eines Polybutadiens mit mehr als einer OH-Gruppe mit Trimellithsäureanhydrid und die Verwendung des Umsetzungsprodukts als Härter für Epoxydharze. Sofern das Polybutadien nur zwei OH-Gruppen aufweist, gelten bei der Verwendung der Produkte die vorstehend beschriebenen Nachteile.

Außerdem ist die Umsetzung von Trimellithsäureanhydrid mit Glykolen zu Esteranhydriden bekannt (US-PS 3 435 002). Diese Produkte werden zur Härtung von Epoxydharzen eingesetzt oder nach der Reaktion mit primären Diaminen nur zu linearen Polyamiden bzw. -imiden verarbeitet. Bei dieser bekannten Umsetzung können jedoch nur Esteranhydride gewonnen werden. Auch in diesem Fall ist eine hohe Vernetzungsdichte nicht erreichbar.

Weiter ist der Einsatz von Esteranhydriden, hergestellt aus Trimellithsäureanhydrid und Äthylenglykol und/oder Propylenglykol, als Härter für Epoxydharze bekannt (EP-AS 2 718). Der Nachteil dieser Produkte ist die schlechte Löslichkeit in Aromaten oder deren Gemische, so daß Ketone bzw. nicht verseifungsstabile Ätheracetate als Lösungsmittel eingesetzt werden müssen.

In der US-PS 3 753 954 werden film- und faserbildende modifizierte Copolymerisate beschrieben, die bis zu 30 Mol.-% aus solchen Einheiten bestehen, die an den Seitenketten des Copolymerisates aromatische Säureanhydrid-Einheiten enthalten und deren andere Komponente ein Olefin-Polymerisat, Polyvinylalkohol, Polyvinylacetat und/oder ähnliche darstellen. Diese modifizierten Copolymerisate besitzen eine gute Anfärbbarkeit, während Hinweise auf die Verwendung als Härter nicht gegeben werden.

Bekannt sind aus der US-PS 3 397 254 Polyester, die endständige Carbonylgruppen tragen und durch Reaktion von mit endständigen Hydroxylgruppen versehenen Polyester mit Tricarbonsäureanhydriden nach folgender Gleichung hergestellt wurden:

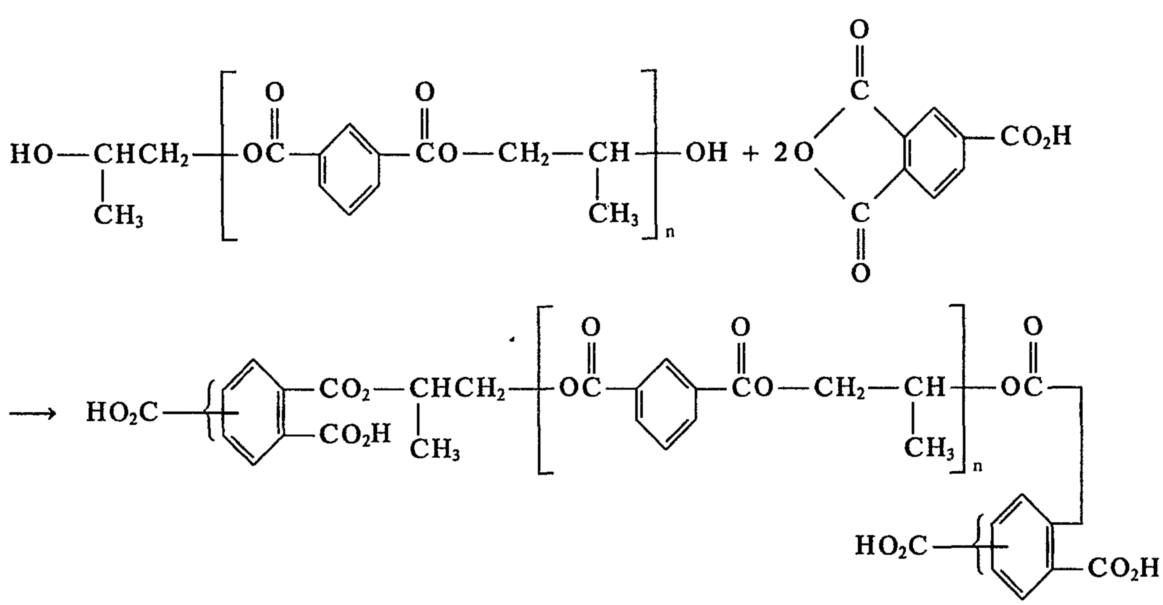

Wie aus dem Reaktionsschema ersichtlich ist, werden hierbei keine Verbindungen gebildet, bei der die mindestens dreiwertige Carbonsäure in der weiter unten geschilderten erfindungsgemäßen Weise an das Restmolekül gebunden ist. Aufgrund der Endständigkeit der Carboxylgruppen ist auch hier eine hohe Vernetzungsdichte nicht zu erreichen.

In der DE-A-2 749 799 sind Trimellithsäuremonoester eines Hydroxygruppen enthaltenen Copolymeren aus Styrol und Allylalkohol beschrieben, deren Trimellithsäurerest eine ähnliche Konfiguration wie in obigem Reaktionsschema aufweist. Auch hier werden andere als die erfindungsgemäßen Verbindungen erhalten, darüber hinaus liegen wiederum endständige Carboxylgruppen vor, mit denen eine

hohe Vernetzungsdichte nicht zu erreichen ist.

Es ist auch aus der DE-OS 2 754 399 eine reaktive härtbare polymere Mischung auf der Basis von

A) Epoxydmischungen und
B) Polycarbonsäureeinheiten

bekannt, wobei die Komponente B)

a) mindestens eine Verbindung einer speziellen Formel oder
b) mindestens eine vierbasische Carbonsäureverbindung mit zwei ortho-ständigen COOH-Gruppen bzw. einer zweiten Anhydridgruppe zusammen mit einem Polymerisations- und/oder Kondensationsprodukt der Gruppe Polyester, Polymerisate und Phenolharz, jeweils mit bestimmten OH-Zahlen

enthält.

In der Formel gemäß Fall a) sind mindestens eine mindestens vierbasische Carbonsäure und mindestens eine mindestens zweibasische Carbonsäure über eine Esterbindung an die Polymerisations- und/oder Kondensationsprodukte, wie sie unter b) genannt sind, gebunden, wobei stets noch eine in ortho-Stellung zur Esterbindung befindliche COOH-Gruppe vorhanden ist.

Diese Systeme haben sich gut bewährt. Es war jedoch erwünscht, die Variationsmöglichkeiten solcher Mischungen bzw. derartiger Systeme noch zu erweitern.

Es war auch erwünscht, die vorstehenden Schwierigkeiten zu vermeiden und Esteranhydride herzustellen, die eine erhöhte Funktionalität, nämlich mehr als 2 Anhydridgruppen pro Molekül besitzen und somit bei Vernetzungsreaktionen eine hohe Vernetzungsdichte ergeben.

Gegenstand der Erfindung sind Verbindungen der Formel (I) (siehe Anspruch 1), worin

R den Rest eines Oligomeren und/oder Polymeren mit mindestens drei freien, seitlich angeordneten OH-Gruppen,
$R^1$ den Rest einer mindestens dreibasischen, zur inneren Anhydridbildung befähigten Carbonsäure,
$R^2$ eine Gruppierung $>O$ und/oder zwei freie OH-Reste oder einen $C_{1-18}$-Alkoxy- und einen OH-Rest, wobei die an den Rest $R^2$ gebundenen CO-Gruppen zueinander orthoständig bzw. zur Anhydridbildung befähigt sind, und wobei $R^1$, $R^2$ und $R^3$ innerhalb eines Moleküls auch verschiedene dieser Bedeutungen haben können,
$R^3$ den Rest einer mindestens zweiwertigen Carbonsäure, wobei $R^3$ auch dieselbe Bedeutung wie $R^1$ haben kann,

bedeuten und wobei in obiger Formel in mindestens einer der beiden Seitenketten mit $R^1$ und, falls $R^3$ den Rest einer mindestens dreiwertigen Carbonsäure bedeutet, auch in mindestens einer der Seitenketten mit $R^3$ an demjenigen C-Atom, das der Esterbindung mit R benachbart ist oder in peri-Stellung dazu steht, eine —COOH-Gruppe stehen kann, die ihrerseits zur Bildung einer weiteren intramolekularen Anhydridgruppe befähigt ist, wobei in obiger Formel die den Rest $R^3$ bildende Carbonsäure dreiwertig dargestellt ist, aber auch zwei- oder höherwertig sein kann.

In der Verbindung gemäß Formel I können die den Rest $R^3$ bildenden Säuren auch unterschiedlich sein, z. B. können eine zwei- und eine dreiwertige Säure vorhanden sein, vergleiche auch Formeln II und III (siehe Formelblatt).

Geeignete, den Alkoxyrest $R^2$ (Formeln II und III, siehe Formelblatt) bildende einwertige Alkohole sind solche mit 1 bis 18, vorzugsweise 1 bis 9 C-Atomen, und zwar primäre, sekundäre oder tertiäre, z. B. Methanol, Äthanol, die verschiedenen Propanole, Butanole, Hexanole, Octanole, Laurylalkohol, Stearylalkohol oder dergleichen in Iso- oder n-Form. Die Reste des Alkylrests $R^4$ in den Formeln II und III entsprechen dem Alkylteil dieser Alkohole.

Überraschenderweise hat es sich gezeigt, daß die erfindungsgemäßen Verbindungen eine gute Löslichkeit, z. B. in Toluol, Xylol, ferner in Aromatengemischen oder dergleichen aufweisen und daß sie aufgrund ihrer Polyfunktionalität hochreaktiv sind.

Im Rahmen der Erfindung liegt auch ein Verfahren zur Herstellung von Esterverbindungen, vorzugsweise Esteranhydriden, gemäß Formel I durch Umsetzung von Oligomeren und/oder Polymeren mit mindestens drei freien seitlich angeordneten alkoholischen OH-Gruppen mit mindestens dreibasischen Polycarbonsäurekomponenten, das dadurch gekennzeichnet ist, daß mindestens eine zur inneren Anhydridbildung befähigte mindestens dreibasische Polycarbonsäurekomponente in Form der Polycarbonsäure oder deren Derivat, z. B. deren Anhydrid, Ester, Teilester oder Halogenid, allein oder zusammen mit einer mindestens zweibasischen Carbonsäurekomponente mit einem freie OH-Gruppen aufweisenden Oligomeren bzw. Polymeren R unter Entfernung von sich bildendem Reaktionswasser bzw. anderen flüchtigen Reaktionsprodukten unter Bildung einer Verbindung der Formel (I), worin R, $R^1$, $R^2$ und $R^3$ die oben angegebene Bedeutung haben, umgesetzt wird, worauf das Produkt als solches isoliert oder einer zumindest teilweisen Hydrolyse und/oder Veresterung von vorhandenen Anhydridgruppen unterzogen wird.

Die Reaktion verläuft überraschenderweise sehr glatt. Obwohl aufgrund der hohen Funktionalität der eingesetzten Komponenten zu erwarten war, daß das Reaktionsgemisch innerhalb kürzester Zeit wegen einer unerwünschten vorzeitigen Vernetzung geliert, entstehen bei der Reaktion keinerlei Schwierigkeiten. Man erhält vielmehr eine klare Lösung.

Geeignete den Rest $R^1$ bildende, zur Anhydridbildung befähigte Polycarbonsäurekomponenten sind beispielsweise Trimellithsäure, 1,2,3-Benzoltricarbonsäure, 1,4,8-, 2,3,6- und 1,2,4-Naphthalintricarbonsäure, 1,2,4-Butantricarbonsäure, deren Anhydride, Ester oder Säurechloride, jeweils allein oder im Gemisch, wobei Trimellithsäure und/oder deren Anhydrid bevorzugt ist.

Die den Rest $R^3$ bildenden mindestens zweibasischen Säuren sind z. B. Di-, Tri- und Tetracarbonsäuren, wie die für $R^1$ genannten, ferner Maleinsäure, Fumarsäure, Bernsteinsäure, Glutar-, Adipinsäure, Sebacinsäure, Phthalsäure, Iso-, Tere-, Halogenphthalsäuren wie Tetrabrom- und Tetrachlorphthalsäure, Endomethylentetrahydrophthalsäure, Hexachlorendomethylen-tetrahydrophthalsäure, Naphthalsäure, 1,8-Naphthylendicarbonsäure, Pyromellithsäure, Benzophenontetracarbonsäure, Naphthalintetracarbonsäure, Tetrahydrofurantetracarbonsäure, Cyclopentantetracarbonsäure, Bicyclooctentricarbonsäure oder dergleichen, jeweils allein oder im Gemisch. Es kann auch von den entsprechenden Derivaten wie Anhydriden — sofern diese existieren —, Estern oder Halogeniden, z. B. Säurechloriden, ausgegangen werden. Für die den Rest $R^3$ bildenden Säuren ist die Fähigkeit der Anhydridbildung nicht erforderlich. Außerdem können diese Säuren auch in Orthostellung zur Esterbindung am Rest R eine COOH- bzw. Estergruppe aufweisen im Gegensatz zu den Polycarbonsäuren $R^1$. Der Anteil dieser den Rest $R^3$ bildenden Carbonsäuren, bezogen auf die Gesamtmenge der die Reste $R^1$ und $R^3$ bildenden Carbonsäuren, beträgt im allgemeinen nicht mehr als 25, vorzugsweise bis zu 10 Äquivalent %.

Der Begriff »Oligomere und/oder Polymere« für R umfaßt Polymerisations- und/oder Kondensationsprodukte, z. B. auch Polyester. Die den Rest R in Formeln (I), (II) und (III) (siehe Formelblatt) bildenden Polyester haben zweckmäßig eine OH-Zahl von 20 bis 300, vorzugsweise 40 bis 220. Sie können in an sich bekannter Weise aus bekannten Polycarbonsäuren wie den oben unter $R^3$ und $R^1$ genannten, gegebenenfalls zusammen mit Monocarbonsäuren, wie Benzoesäure, Butylbenzoesäure, Laurinsäure, Isononansäure, Fettsäuren natürlich vorkommender Öle bzw. aus Gemischen oder Anhydriden der genannten Säuren, sofern diese existieren, hergestellt sein. Geeignete Alkoholkomponenten dieser Polyester sind mehrwertige Alkohole, wie Äthylenglykol, die verschiedene Propandiole, Butandiole, Pentandiole, wie Neopentylglykol, Hexandiole, Diäthylenglykol, Dimethylolcyclohexan, Trimethylpentandiol, Trimethyloläthan oder -propan, Glycerin, Pentaerythrit, Dipentaerythrit, Bishydroxyäthyliso- oder -terephthalsäureester, Tris-hydroxyäthylisocyanurat, gegebenenfalls zusammen mit einwertigen Alkoholen, wie Butanol, Octanol, Laurylalkohol, Linoleylalkohol, äthoxylierten bzw. propoxylierten Phenolen oder dergleichen, jeweils einzeln oder im Gemisch. Bei etwaiger Umsetzung mit einwertigen Alkoholen sind diese im Unterschuß einzusetzen, z. B. in einem Anteil von bis zu 30, vorzugsweise 5 bis 10 Äquivalent-%.

Die Polyester R der Verbindung I, II oder III können auch durch mindestens teilweisen chemischen Abbau von hochmolekularen Polyestern aromatischer Natur, wie Terephthalsäure-Äthylenglykol- oder -Butandiol-polyestern, Isophthalsäure-Äthylenglykol- oder -Hexandiol-polyestern, unter Einwirkung von ein- und/oder mehrwertigen Alkoholen, Estern, Dicarbonsäuren oder dergleichen entstanden sein. Die Polyester schließen auch solche mit mindestens einer Äthergruppe ein.

Als Oligomere und/oder Polymere, die in Formel (I) den Rest R bilden, sind auch Homo-und/oder Copolymere mit einer OH-Zahl von 20 bis 800, vorzugsweise 40 bis 600, insbesondere 50 bis 500 auf der Basis folgender Monomerer geeignet. Acryl- und/oder Methacrylsäurehydroxyalkylester mit 2—8, insbesondere 2 bis 4 C-Atomen in der Alkylgruppe wie Hydroxyäthyl-, Hydroxypropyl-, Hydroxybutylester, Allylalkohol, und OH-Gruppen enthaltende Maleinsäureester. Geeignete Monomere, die mit den vorgenannten Verbindungen copolymerisiert werden können, sind beispielsweise Styrol, $\alpha$-Methylstyrol, die verschiedenen Vinyltoluole, Fumar- und Maleinsäure, deren Anhydrid oder Alkylester, Acryl- oder Methacrylsäurealkylester, wie Methyl-, Äthyl-, Propyl-, Butyl-, Äthylhexylacrylat oder -methacrylat, Acrylnitril, Allylverbindungen, wie Allylacetat, ferner Äthylen, Propylen, Butadien, Isopren, Cyclopentadien und dessen Derivate. Besonders geeignet ist ein Copolymerisat aus Acryl- und/oder Methacrylsäurehydroxyalkylester, Styrol und mindestens einem Acryl- und/oder Methacrylsäurealkylester.

In der Regel werden zur Herstellung der Verbindungen der Formeln I, II oder III nach dem erfindungsgemäßen Verfahren die Polycarbonsäurekomponenten mit den Oligomeren bzw. Polymeren in stöchiometrischen Mengen umgesetzt. Unter »stöchiometrischen Mengen« ist jeweils nur die mit dem Oligomeren bzw. Polymeren R unter Veresterung reagierende freie COOH-Gruppe der Polycarbonsäurekomponente pro OH-Gruppe von R zu verstehen. Es kann aber auch zweckmäßig sein, eine der Komponenten im Überschuß, z. B. von bis zu 10, vorzugsweise bis zu 5 Mol-% umzusetzen. Falls COOH-Gruppen im Überschuß vorhanden sind, kann dies für die Umsetzung eines möglichst hohen Anteils an OH-Gruppen von Vorteil sein.

Je nach der Verfahrensführung lassen sich solche Produkte herstellen, die gleichzeitig Seitengruppen gemäß Formel I und solche gemäß Formel II (siehe Formelblatt) enthalten, wie in Formel III des Formelblatts dargestellt ist. In diesen Formeln haben die Reste R, $R^1$, $R^2$ und $R^3$ dieselbe Bedeutung wie in Formel I. $R^4$ kann jeweils gleich oder verschieden sein und Wasserstoff oder einen Alkylrest mit 1 bis 18, vorzugsweise 1 bis 9 C-Atomen bedeuten. In Formel II ist zwar $R^3$ als Dicarbonsäurekompo-

nente dargestellt. Ebenso kann sich $R^3$ aber auch von einer Tri- und/oder höherwertigen Carbonsäure bzw. von deren Derivaten herleiten. Es ist auch möglich, die Reaktion so zu führen, daß ein Teil der an die OH-Gruppen der Oligomeren und/oder Polymeren gebundenen Gruppen der Polycarbonsäurekomponenten so eingebaut ist, daß die Seitenketten Halbester bilden, also z. B. ein gemäß Formel II (siehe Formelblatt) an die Tricarbonsäure $R^1$ gebundenes $R^4$ Wasserstoff ist. Die Bildung von Produkten des jeweils gewünschten Typs hängt von den Reaktionsbedingungen ab.

Falls eine höhere Reaktivität der Produkte erwünscht ist, wird man die Bildung von Anhydridgruppen in den Produkten der Formel I bevorzugen, d. h. also bei höheren Temperaturen arbeiten. Falls jedoch ein Reaktionsprodukt mit einer längeren Härtungszeit eingesetzt werden soll, wird man die Reaktion bei tieferen Temperaturen durchführen. Es ist auch möglich, die Reaktion so zu steuern, daß die Halbestergruppen im Produkt gegenüber den intakten Anhydridgruppen nur in untergeordneter Menge vorliegen. Auf diese Weise läßt sich auch durch geeignete Temperaturführung die gewünschte Reaktivität und Löslichkeit der Produkte einstellen. Im allgemeinen bewirkt ein höherer Anteil von Halbestergruppen in den Seitenketten eine erhöhte Verträglichkeit mit Lösungsmitteln.

Beispielsweise werden Anhydridgruppen dann gebildet, wenn die Temperatur 150 bis 270, vorzugsweise 180 bis 240°C beträgt und das Reaktionswasser in an sich bekannter Weise, gegebenenfalls unter Verwendung eines azeotropen Lösungsmittels laufend entfernt wird.

Falls Produkte mit vorwiegend freien COOH-Gruppen in der Seitenkette erwünscht sind, kann die Bildung der freien COOH-Gruppen durch Hydrolyse der Anhydridgruppen erfolgen.

Mit Vorteil wird bei der erfindungsgemäßen Umsetzung die Säurekomponente vorgelegt und die OH-Gruppen enthaltende Komponente anteilweise zugegeben. Diese Maßnahme trägt zusätzlich zu einem besonders guten Verlauf der Reaktion bei.

Die zugegebene, OH-Gruppen enthaltende Komponente R kann in Form des Oligomeren und/oder Polymeren oder, wenn sie ein echtes Polymerisat ist, auch in Form von dessen mono meren Komponenten zu der vorgelegten Säurekomponente, z. B. dem Säureanhydrid zugegeben werden, so daß die Polymerisation der Komponente R und der Einbau der Polycarbonsäurekomponente unter mindestens teilweiser Veresterung gleichzeitig in einem einzigen Verfahrensschritt erfolgen können. Dies stellt eine wesentliche Vereinfachung des Verfahrens dar. Beispielsweise kann nach diesem Verfahren eine besonders gleichmäßige statistische Verteilung der Seitengruppen gemäß Formel I bzw. II und III im Polymeren und/oder Oligomeren gemäß dem Rest R erfolgen.

Bei dieser Ausführungsform, die in dem vorgenannten Temperaturbereich durchgeführt werden kann, laufen drei chemische Prozesse ab, nämlich 1. die Polymerisation, 2. Veresterung der COOH-Gruppe der Polycarbonsäurekomponente und 3. die Umlagerung in die stabile Anhydridform gemäß Formel I. Durch geeignete Maßnahmen kann diese Umlagerung bis zu dem gewünschten Grad gesteuert werden. Der Temperaturbereich bei dieser Ausführungsform beträgt zweckmäßig 155 bis 260, vorzugsweise 170 bis 230°C, um eine ausreichende Umlagerung zu gewährleisten. Dabei werden überraschenderweise klar definierte Produkte erhalten. Entgegen den Erwartungen tritt auch in diesem Fall keine vorzeitige Gelierung ein.

Das erfindungsgemäße Verfahren kann ohne Katalysator durchgeführt werden. In manchen Fällen ist es jedoch erwünscht, in Gegenwart eines üblichen Veresterungskatalysators zu arbeiten, beispielsweise mit Metallsalzen, wie Lithium-, Natrium-, Calcium-, Strontium-, Barium-, Zink- und/oder Bleisalzen organischer Säuren, z. B. Natriumacetat, Calciumacetat oder dergleichen, jeweils einzeln oder im Gemisch.

Es ist möglich und bevorzugt, für die Umsetzung geeignete organische Lösungsmittel einzusetzen, wie Toluol, Xylol, die verschiedenen Cymole, Tetrahydronaphthalin, ein Gemisch von aromatischen und gegebenenfalls aliphatischen, gegebenenfalls halogenierten Kohlenwasserstoffen mit einem Siedebereich von 100 bis 250°C. Außerdem kann die Umsetzung unter normalen oder erhöhtem Druck durchgeführt werden. Im letzten Fall kann daher der angegebene Temperaturbereich überschritten werden.

Falls die Hydrolyse der Anhydridgruppen in den Seitenketten der erfindungsgemäß erhaltenen Produkte vorgenommen wird, erfolgt diese in der Regel in üblicher Weise mit der theoretischen Menge oder einem Überschuß Wasser, gegebenenfalls in Gegenwart von aprotischen Lösungsmitteln, z. B. Dimethylformamid, Dimethylacetamid, Dimethylsulfoxyd, N-Methyl-pyrrolidin, Aceton, Methyläthylketon, jeweils allein oder im Gemisch mit unpolaren Lösungsmitteln, insbesondere Aromaten wie Benzol, Toluol und Xylol. Die Temperatur bei der Hydrolyse beträgt im allgemeinen 60 bis 140, vorzugsweise 80 bis 110°C. Gegebenenfalls kann in Gegenwart eines Katalysators gearbeitet werden, z. B. mit tertiären Basen, niederen Carbonsäuren wie Ameisensäure, Essigsäure und/oder Propionsäure. Die Hydrolyseprodukte haben den Vorteil, daß sie bei ihrer etwaigen Verwendung als Härter vor allem eine hohe Anfangsreaktivität zeigen.

Die erfindungsgemäßen Verbindungen bzw. die nach dem erfindungsgemäßen Verfahren hergestellten Produkte zeigen eine gute Löslichkeit in wäßrigem Alkali. Das ist ein Beweis dafür, daß selbst bei gleichzeitiger Polymerisation und Veresterung der Polycarbonsäurekomponente an alle Oligomeren- und/oder Polymerenketten ankondensiert wird.

Die erfindungsgemäßen Verbindungen sind aufgrund ihrer vorteilhaften Eigenschaften für eine vielseitige Verwendung geeignet. Beispielsweise können die Säure- oder Anhydridgruppen ganz oder

teilweise in die entsprechenden Salzgruppen übergeführt werden, z. B. in die entsprechenden Alkali-, Amin- oder Ammoniumsalze, so daß wasserverdünnbare Substanzen entstehen. Der Anteil der Salzbildung kann dabei zur Zahl der Seitengruppen in Relation gesetzt werden.

Die erfindungsgemäßen Produkte, insbesondere die wasserverdünnbaren lassen sich beispielsweise als Bindemittel, Verdickungsmittel, Schlichtemittel, z. B. in Textilbehandlungsmitteln, einsetzen. Es ist auch möglich, sie als Emulgatoren, Stabilisatoren oder dergleichen in wäßrigen Systemen bzw. wäßrig-organischen Systemen, z. B. Dispersionen oder dergleichen zu verwenden. Vorzugsweise werden die erfindungsgemäßen Verbindungen in Mischungen zur Herstellung von Anstrichmitteln und/oder Überzügen bzw. für Aus-und/oder Verkleidungen eingesetzt.

Vor allem dienen sie als Härter für solche Verbindungen mit funktionellen Gruppen, die mit den COOH-, Anhydrid- und/oder Estergruppen der erfindungsgemäßen Produkte reagieren, beispielsweise als Härter für härtbare Oligomere und/oder Polymere sowie Kondensations- bzw. Additionsprodukte mit freien Epoxyd-, Amin- und/oder OH-Gruppen. Dies sind vor allem OH-Gruppen aufweisende Polyester, Polyepoxyde, Phenolharze einschließlich Resolen und Novolaken, OH-Gruppen enthaltende härtbare Polymere, z. B. die für R genannten, ferner Aminharze.

Geeignete härtbare Epoxyverbindungen sind z. B. aromatische und/oder aliphatische Glycidyläther, z. B. solche von Diphenylolalkanen, wie Diphenylolmethan oder -propan mit Epihalogenhydrin, ferner Polyepoxydalkane mit einer C-Zahl von 4 bis 20, vorzugsweise von 4 bis 12, und einer Oxiranringzahl von 2 bis 6, vorzugsweise von 2 bis 4; ferner epoxydierte Butandienöle, deren C-Alkylierungsprodukte, z. B. Isoprenöle; aliphatische Polyglycidyläther, z. B. von Polyolen, wie Äthylenglykol, Di- und/oder Triäthylenglykol, 2,2-Dimethylpropandiol, Propandiol-1,2 oder -1,3, Butandiol-1,4 oder -1,3, Pentandiol-1,5, Hexandiol-1,6, ferner Glycerin, Trimethylol-äthan oder -propan, Dimethylolcyclohexan, epoxydierte Fettsäureester, z. B. epoxydiertes Sojaöl oder Leinöl bzw. dimere und/oder trimere Verbindungen dieses Typs; alicyclische Bis-epoxyde, z. B. Vinylcyclohexendioxyd, Limonendioxyd, Bis-(epoxycyclohexyl)-methan bzw. -propan, Dicyclopentadiendioxyd, Bis-(epoxyd-cyclopentyläther); epoxydhaltige aliphatische und/oder cycloaliphatische Äther und/oder Ester, z. B. Bis(-epoxypropyl)-hexahydrophthalat, Bis(-epoxy-propyl)-adipat; aber auch epoxydierte Polyester und/oder oligomere bzw. polymyere Glycidylacryl- bzw. -methacrylsäureester und/oder deren Copolymere, z. B. mit Acryl- bzw. Methacrylsäureestern, Maleinsäureestern, Äthylen, Propylen, Butylen, Styrol, den verschiedenen Vinyltoluolen, $\alpha$-Methylstyrol, Vinylcyclohexan; trimerisierte Epoxydverbindungen, z. B. Triglycidylisocyanurat, jeweils einzeln oder im Gemisch.

Zusätzlich können neben den vorgenannten Epoxydverbindungen auch Monoepoxyde, z. B. zur gezielten Defunktionalisierung, bei der Härtung eingesetzt werden. Geeignete Monoepoxyde sind z. B. Olefinoxyde, wie Octylenoxyd, Butylglycidyläther, Allylglycidyläther, Phenylglycidyläther, p-Butylphenolglycidyläther, Kresylglycidyläther, 3-(Pentadecyl)-phenolglycidyläther, Styryloxyd, Glycidylmethacrylat, Cyclohexenvinylmonooxyd, Dipentenmonooxyd, $\alpha$-Pinenoxyd, Glycidylester von tertiären Carbonsäuren.

Die Härtung erfolgt im allgemeinen bei Temperaturen von 0 bis 350, vorzugsweise bei 0 bis 100°C gewöhnlich ohne Katalysator, bei Lösungsmittel enthaltenden Systemen vorzugsweise bei 50 bis 190°C. Bei diesen relativ tiefen Temperaturen kann es auch in manchen Fällen zweckmäßig sein, zusätzlich einen Katalysator zu verwenden. Dies gilt beispielsweise auch in wärmehärtbaren Beschichtungsmischungen, die gegebenenfalls in Pulverform vorliegen. Gegebenenfalls kann die Härtung auch durch Strahlenhärtung erfolgen.

Zur Beschleunigung der Härtung kann es zweckmäßig sein, der Mischung einen Katalysator in einem Anteil von bis zu 5, vorzugsweise 0,01 bis 0,5 Gew.-%, bezogen auf Festkörpergehalt, zuzusetzen. Geeignete basische Katalysatoren sind z. B. Diazabicyclooctan, -nonen bzw. -undecen, Imidazolderivate, wie 3-Methyl-, Phenyl- oder Cyclohexylimidazol, Trialkylamine, wie Triäthyl-, Tributyl-, Tricyclohexylamin, N-Alkylperidine, N,N'-Dialkylpiperazine, Trialkyl- bzw. Triacryl-phosphine, N,N'-Tetraalkylaminoalkyloxamide, N-Dialkyl-aminoalkyl-oxamidsäurealkylester, Hydroxyde, Carbonate und Salze organischer Säuren der Alkalimetalle, wie Lithiumhydroxyd, Kaliumcarbonat, Natrium- oder Lithiumbenzoat, ferner deren Additionsverbindungen mit Kronenäthern oder ähnlichen Liganden sowie Alkalisalze der umzusetzenden Verbindungen. Auch Chelate des Magnesiums, Aluminiums und des Titans, wie sie z. B. in der DE-OS 2 723 492 als Carboxylgruppen-Acceptoren beschrieben sind, sind zur Katalyse geeignet. Darüber hinaus katalysieren auch Salze der vorgenannten organischen Basen mit organischen Säuren, z. B. mit Essigsäure, Propionsäure, Laurinsäure oder Salizylsäure die beanspruchten Reaktionen. Es können auch Katalysatorengemische zum Einsatz kommen.

Unter den genannten Epoxydverbindungen reagieren insbesondere aliphatische und cycloaliphatische sehr leicht mit den erfindungsgemäßen Verbindungen unter Vernetzung und Polymerenbildung. In vielen Fällen erhält man bereits bei Raumtemperatur, z. B. bei 20°C, auch ohne Katalysator eine ausgezeichnete Vernetzung. Jedoch wird durch Temperaturerhöhung, z. B. auf 30 bis 210, vorzugsweise 80 bis 190°C die Härtungszeit außerordentlich verkürzt. Daher werden auch unter Schocktrocknungsbedingungen, wie sie beispielsweise bei Coil- oder Can-Coating-Verfahren verwendet werden, also bei Temperaturen von 200 bis 350°C und extrem kurzen Zeiten, z. B. 10 Sekunden bis 3 Minuten, ausgezeichnete Beschichtungen erhalten.

Zweckmäßig beträgt in den härtbaren Mischungen mit Polyepoxyden das Verhältnis der Carboxyläquivalente der in den Seitenketten befindlichen Polycarbonsäurekomponenten $R^1$ und $R^3$ zum Epoxydäquivalent in den Epoxydverbindungen 1 : 5 bis 5 : 1, vorzugsweise 1 : 2 bis 2 : 1. Innerhalb des bevorzugten Bereichs, z. B. bei einem Verhältnis von 1 : 1, ergeben sich besonders gute filmbildende Eigenschaften. Ein kleiner Überschuß an Carboxyläquivalenten bewirkt im allgemeinen eine Verbesserung der Haftung. Gegebenenfalls macht man auch von überschüssigen Epoxydgruppen Gebrauch, z. B. bei stark lipophilen Systemen, z. B. für Primer. Das gegenseitige Verhältnis wird man daher je nach dem gewünschten Verwendungszweck abstimmen.

Nach einer Ausführungsform der Erfindung kann die härtbare Mischung zusätzlich noch mindestens ein wärmehärtbares Kunstharz der Gruppe Melaminharz, Harnstoffharz, Guanaminharz und Phenolharz, jeweils einzeln oder im Gemisch in einem Anteil von bis zu 30, vorzugsweise von 2 bis 15 Gew.-% des Gesamtfestkörpergehalts enthalten. Durch einen solchen Zusatz kann insbesondere bei Härtung unter erhöhter Temperatur eine erhebliche Steigerung der Chemikalien- und Lösungsmittelbeständigkeit erzielt werden. Als Phenolharze kommen die obengenannten in Frage.

Geeignete Aminharze sind Harnstoff- und/oder Melaminharze mit freien OH-Gruppen, die gegebenenfalls zumindest teilweise mit einwertigen Alkoholen mit 1 bis 4 C-Atomen veräthert sind.

Da bei der Härtung mit den erfindungsgemäßen Verbindungen eine verhältnismäßig engmaschige Vernetzung erhalten wird, sind die ausgehärteten Systeme sehr beständig gegenüber chemischen und atmosphärischen Einflüssen, z. B. gegenüber organischen Lösungsmitteln, Wasser und verdünnten Säuren. Außerdem bewirkt die engmaschige Vernetzung die Ausbildung von Filmen mit sehr harter Oberfläche, die jedoch trotzdem keine Versprödung, sondern eine ausreichende Elastizität aufweisen.

Je nach der Auswahl und den gegenseitigen Mengenverhältnissen der Polycarbonsäurekomponenten und der den Rest R bildenden Oligomeren bzw. Polymeren lassen sich die chemische Beständigkeit und die Eigenschaften der erfindungsgemäßen Verbindungen gegenüber Lösungsmitteln abstimmen.

Die erfindungsgemäß hergestellten Verbindungen sind von erheblichem Interesse in Beschichtungsmischungen in Pulverform. Solche Pulver lassen sich bei verhältnismäßig niedrigen Temperaturen einbrennen. Aufgrund ihrer hohen Reaktivität und guten Löslichkeit auch in organischen Lösungsmitteln, lassen sich jedoch auch mit Lösungsmittel enthaltenden Systemen sehr gute Überzüge herstellen. Dies gilt auch für Wasser enthaltende Systeme, insbesondere Überzugsmittel, wobei in diesen Systemen in der Regel vorwiegend freie COOH-Gruppen am Rest $R^1$ und $R^3$ vorhanden sind. Es kann aber auch ein untergeordneter Anteil an Estergruppen vorhanden sein. Die Härtungstemperatur der wasserhaltigen Systeme beträgt im allgemeinen 130 bis 210, vorzugsweise 140 bis 180° C.

Die Lösungsmittelsysteme sind deshalb von erheblichem praktischem Interesse, weil sie aufgrund der hohen Reaktivität der Produkte auch kalthärtend sein können. Hierfür geeignete Lösungsmittel sind beispielsweise Toluol, Xylol, Butanol, Äthylacetat, Butylacetat, Äthylenglykoldiacetat, Äthylenglykolmonoäthyl- oder -butyläther oder deren Acetate, Äthylenglykoldimethyläther, Diäthylenglykoldimethyläther, Aromaten enthaltende Benzine, Cyclohexanon, Methyläthylketon, Aceton, Isophoron, Acetoxyglykolsäurebutylester, Acetoxyglykolsäureäthylester, jeweils einzeln oder im Gemisch. Zuweilen ist es auch möglich, diese Lösungsmittel mit jeweils bis zu 50% an Lackbenzinen, die arm an oder frei von Aromaten sind, zu vermischen.

Mit den härtbaren Mischungen, die die erfindungsgemäßen Verbindungen enthalten und die eine ausgezeichnete Stabilität gegenüber UV-Strahlung aufweisen, können nun unpigmentierte, pigmentierte oder mit anderen Füllstoffen versehene Beschichtungssysteme, z. B. Lacke, hergestellt werden, die gegebenenfalls auch unter der Einwirkung von Katalysatoren bereits bei Raumtemperatur genügend rasch härten und dann Überzüge mit ausgezeichneten mechanischen Eigenschaften liefern.

Die härtbaren Mischungen lassen sich auf die verschiedensten Unterlagen aufbringen, sofern diese den Härtungstemperaturen des Überzugs standhalten. Geeignete Unterlagen sind z. B. Keramik, Holz, Glas, Beton, Kunststoffe, vorzugsweise Metall. Die Überzugsmittel haften ausgezeichnet auf den verschiedensten Metallunterlagen ohne haftvermittelnde Grundierung bzw. Zwischenschicht. Die gute Haftung dieser Lackierungen entspricht den Werten GT 0A bis GT 1A nach den Prüfvorschriften gemäß DIN 53 151. Außerdem lassen sich diese Überzüge sehr gut verformen, weisen hohe Wetterbeständigkeit und ausgezeichnete chemische Beständigkeit auf.

Die erfindungsgemäßen Verbindungen sind für die Herstellung von korrosionsschützenden Überzügen und/oder Zwischenbeschichtungen für die verschiedensten Anwendungsgebiete geeignet, insbesondere als resistente Lackierungen und Mattlackierungen. Weiter eignen sie sich für die Beschichtung und Auskleidung von Gegenständen, die mit Treibstoffen und Lösungsmitteln in Berührung kommen, außerdem für Schutzüberzüge gegen atmosphärische Einflüsse, wie Straßenmarkierungen, Bauteile für elektrotechnische Zwecke bzw. deren Elementen, insbesondere für elektrische Leiter, sowie für Beschichtungen von thermisch beanspruchten Gegenständen.

Aufgrund ihrer günstigen Eigenschaften sind die Überzugsmittel mit den erfindungsgemäßen Verbindungen als Härter auch hervorragend für die Einschichtlackierung geeignet. Je nach Wahl der zu härtenden Verbindung können mit diesen Überzugsmitteln beschichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert

bleiben, sie kann aber auch als Zwischenschicht, also als Unterlage für weitere Überzüge dienen, die wiederum aus demselben oder einem anderen üblichen Beschichtungsmaterial bestehen können.

Die erhaltenen Überzüge stellen je nach Wunsch glänzende Filme mit ausgezeichneter mechanischer und chemischer Beständigkeit und mit guter Wetterstabilität dar. Andererseits ist es auch möglich, je nach Wunsch Mattlacke mit hervorragenden mechanischen und chemischen Eigenschaften herzustellen. Hierfür ist überraschenderweise kein besonders hoher Anteil an Pigmenten und Füllstoffen erforderlich.

Außerdem eignen sich diese Mischungen in fester Form für 2-Komponenten-Klebstoffe, z. B. für hochreaktive Schmelzkleber sowie für flüssige und/oder lösungsmittelhaltige, wärmehärtbare Klebstoffe. Auch als Bindemittel für textile, organische und/oder anorganische Materialien sind sie einsetzbar. Die erfindungsgemäßen Verbindungen sind auch zur Verwendung für härtbare Formmassen, Gießharze, Kitte und als Isolierlack geeignet.

Die Verwendung der erfindungsgemäßen Verbindungen, vor allem solcher mit Halbestern in den Seitenketten, insbesondere solchen mit den höheren C-Zahlen, führt bei Anstrichmitteln und Überzügen zu ausgezeichneten Eigenschaften, wie besonders gutem Verlauf und im gehärteten Film zu guter Flexibilität, Elastizität, hohem Glanz und homogener Oberfläche.

Die gute Löslichkeit in Aromaten macht die erfindungsgemäßen Verbindungen auch zur Verwendung als Druckfarbenbindemittel, z. B. für den Toluoltiefdruck, geeignet.

In den folgenden Beispielen bedeuten T Gew.-Teile, % Gew.-%, FZ Farbzahl, OHZ OH-Zahl, $SZ_{H_2O}$, $SZ_{BuOH}$ jeweils die Säurezahl in wäßriger bzw. in Butanollösung, Fp den Schmelzpunkt, gef. = gefunden und ber. = berechnet.

## Beispiele

### I. Herstellung

1) 496 T Copolymerisat aus 296 T Styrol, 148 T Methylmethacrylat, 181 T Hydroxyäthylmethacrylat (OHZ 113, SZ < 2, FZ der 50%igen Lösung 3) werden in 496 T Tetrahydronaphthalin (Kp. 206° C) gelöst und anteilweise einer Schmelze von 112 T Trimellithsäureanhydrid; die 0,3 T Bariumoctoat enthält, innerhalb von 8 Stunden bei 220° C zugegeben. Die Veresterung wird unter Rückführung des Lösungsmittels fortgesetzt, bis 18 T Wasser abgeschieden sind. Das Lösungsmittel wird unter vermindertem Druck abgezogen. Kenndaten des erhaltenen Produkts: Fp 50° C, Viskosität 1200 mPa · s (60% in Xylol), $SZ_{H_2O}$ gef. 157 (ber. 153), $SZ_{BuOH}$ gef. 82 (ber. 80,5).

2) 315 T Copolymerisat aus 256 T Styrol, 128 T Methylacrylat, 115 T Hydroxyäthylmethacrylat (OHZ 89, SZ < 2, FZ der 50%igen Lösung 3) werden in 210 T Xylol gelöst und anteilweise einer Schmelze von 96 T Trimellithsäureanhydrid, die 0,15 T Bleioctoat enthält, innerhalb von 5 Stunden bei 230° C zugegeben. Die Veresterung wird analog Beispiel 1 so lange fortgesetzt, bis 9 T Wasser abgeschieden sind. Das Lösungsmittel wird unter vermindertem Druck entfernt. Kenndaten des Produkts: Fp 60° C, Viskosität 410 mPa · s (50%ig in Xylol), $SZ_{H_2O}$ 138, $SZ_{BuOH}$ 73.

3) (Hydrolyse) 200 T des nach Beispiel 1 erhaltenen Harzes werden in 200 T Äthylenglykoldimethyläther gelöst und bei 80° C mit 24,7 T Wasser hydrolysiert, bis sich die Säurezahl, in Butanol-Lösung gemessen, auf 138 erhöht hat. Nun wird überschüssiges Wasser mit Chloroform unter vermindertem Druck bei 43° C abgetrieben und das Gemisch mit Xylol auf 56%ige Lösung verdünnt (Xylol zu Äthylenglykoldimethyläther = 1,35 : 1). SZ der 56%igen Lösung 77,3. Das entspricht der SZ 138 für 100%iges Harz.

4) 341 T Copolymerisat aus 178 T Styrol, 89 T Methylmethacrylat, 232 T Hydroxyäthylmethacrylat (OHZ 169) werden in 309 T eines aromatenreichen Lösungsmittelgemisches (Siedepunkt ca. 200° C) gelöst und einer Schmelze von 192 T Trimellithsäureanhydrid und 0,3 T Lithiumbenzoat innerhalb von 10 Stunden bei 210° C anteilweise zugegeben. Die Veresterung wird unter Rückführung des Lösungsmittels weitergeführt, bis 18 T Wasser abgeschieden sind. Das Lösungsmittel wird unter vermindertem Druck entfernt. Kenndaten des Harzes: $SZ_{H_2O}$ 197, $SZ_{BuOH}$ 92,1, Fp 69° C, Viskosität 5080 mPa · s (60%ig in Xylol).

5) (Hydrolyse) 700 T des nach Beispiel 4 hergestellten Harzes werden in 200 T Äthylenglykoldimethyläther gelöst und mit 40 T Wasser bei 80° C so lange hydrolysiert, bis die $SZ_{H_2O}$ auf 187 angestiegen ist. Es wird nun wie im Beispiel 3 überschüssiges Wasser mit Chloroform bei 43° C entfernt und das Gemisch mit Xylol auf 56% Festharz eingestellt (Xylol zu Äthylenglykoldimethyläther = 1,35 : 1). SZ der Lösung 110,3. Das entspricht der SZ 197 für 100%iges Harz.

6) Eine Mischung von 173,5 T Hydroxyäthylmethacrylat, 288 T Styrol und 247,3 T Methylmethacrylat, in der 7,3 T tertiär-Butylperoxyd gelöst sind, wird innerhalb von 14 Stunden anteilweise zu einer Schmelze von 288 T Trimellithsäureanhydrid, die noch einen geringen Anteil Xylol enthält, bei einer Anfangstemperatur von 180 bis 220° C zugegeben. Das gebildete Reaktionswasser wird laufend im Wasserabscheider entfernt. Die Umlauftemperatur wird unter Rückführung des azeotropen Lösungsmittels Xylol eingestellt. Die Veresterung wird bei 220° C weitergeführt, bis kein Wasser mehr gebildet wird. Dann wird das Lösungsmittel unter vermindertem Druck abdestilliert. Kenndaten des Produkts: Fp 51° C, Viskosität 586 mPa · s (60%ig in Xylol), $SZ_{H_2O}$ 166, $SZ_{BuOH}$.

7) (Hydrolyse) 600 T des Polyanhydrids aus Beispiel 1 werden mit 150 T Methylisobutylketon und 25 T Wasser 2 Stunden bei 100° C gerührt. Anschließend wird eine Mischung aus 125 T Xylol und 150 T Butanol eingerührt. Nach dem Abkühlen wird eine hellgelbe »Polycarbonsäurelösung« mit folgenden Kennzahlen erhalten: Viskosität 490 mPa · s, Trockenrückstand (1 h bei 150° C) 58,5%, $SZ_{H_2O}$ 157 (100%iges Harz), $SZ_{BuOH}$ 156 (100%iges Harz).

II. Verwendung

8) 200 T der nach Beispiel 7 erhaltenen »Polycarbonsäurelösung« werden mit 84 T einer 70%igen Lösung eines handelsüblichen epoxydierten Sojaöls (Epoxydäquivalent: 176) in Xylol/Äthylenglykolmonoäthylätheracetat Butanol (4 : 1 : 1) vermischt. Die so erhaltene härtbare Mischung wird auf Glasplatten mit 100 µm Naßfilmdicke aufgebracht. Die Aushärtung erfolgt bei Raumtemperatur (22° C) oder 30 min bei 80° C oder 30 min bei 120° C. Die Trocknung und Härtung liefert folgende Ergebnisse:

| Raumtemperatur | | 30 min/80° C | | 30 min/120° C | |
|---|---|---|---|---|---|
| Perltrocknung | 7 min | | | | |
| Klebfreitrocknung | ca. 8 h | | | | |
| Pendelhärte nach | s | nach | s | nach | s |
| 2 h | 6 | | | | |
| 4 h | 9 | | | | |
| 6 h | 14 | | | | |
| 8 h | 17 | | | | |
| 24 h | 58 | 24 h | 145 | 24 h | 182 |
| 5 Tagen | 93 | 5 Tagen | 161 | | |
| 10 Tagen | 120 | 10 Tagen | 168 | | |

Die Filme zeigen hohen Glanz (> 96%), gute Xylolbeständigkeit (25 min), Laugenbeständigkeit (> 1 h bei 10%iger wäßriger NaOH) und Alkoholbeständigkeit (30 min). Sie zeigen keine Störungen beim Verlaufen.

9) 179 T der nach Beispiel 3 hergestellten Lösung werden mit 228 T einer 79,3%igen Lösung eines handelsüblichen Polyesters aus Phthalsäure, Isophthalsäure, Neopentylglykol und Trimethylolpropan (OH-Zahl 76) verrührt, so daß der Festkörpergehalt der Lösung ca. 60% beträgt. Kennzahlen der reaktiven Polymermischung: Viskosität 521 mPa · s, Trockenrückstand (1 h bei 125° C) 60,7%, $SZ_{H_2O}$ 67 (100%iges Harz), $SZ_{BuOH}$ 67,5 (100%iges Harz).

Das Material wird mit 200 µm Naßfilmstärke auf Glasplatten aufgetragen und 15 min bei 180° C eingebrannt. Die klaren, störungsfreien Filme haben eine Pendelhärte von 125.

Formelblatt

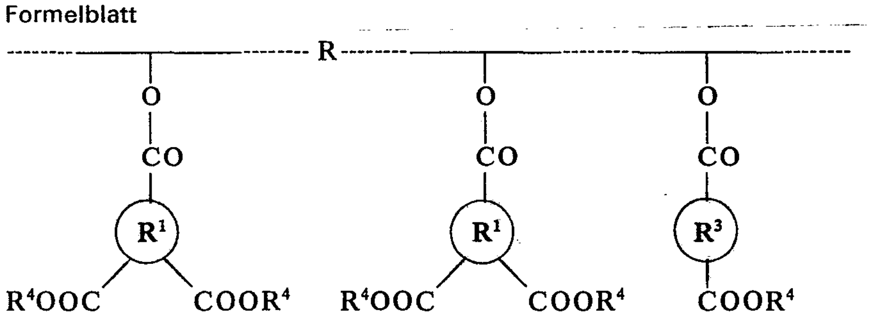

(II)

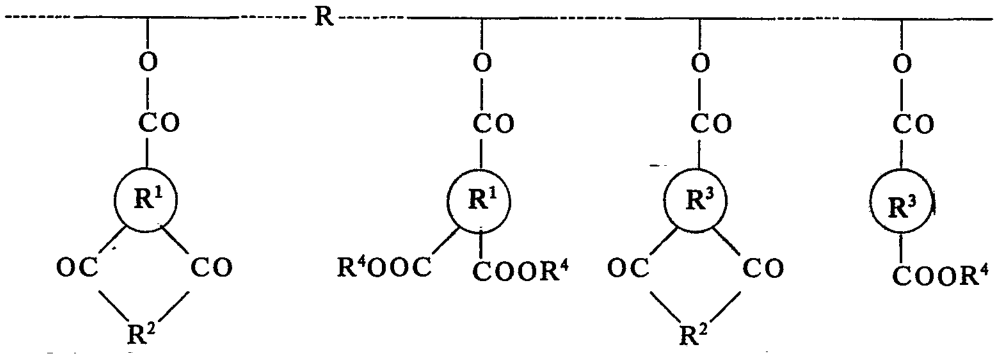

(III)

**Patentansprüche für die Vertragsstaaten: BE CH DE FR GB IT LI NL SE**

1. Esterverbindungen der Formel

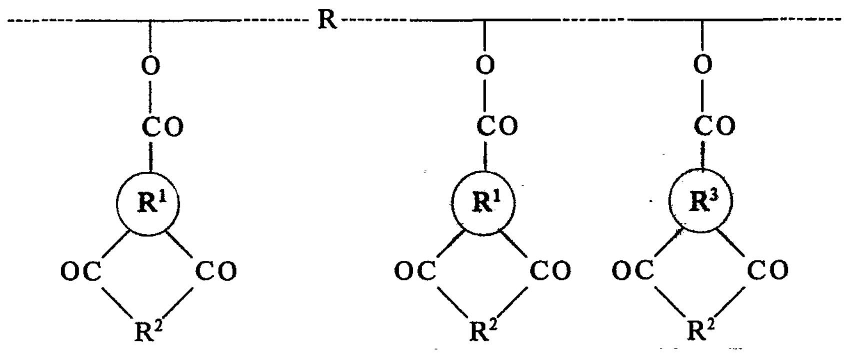

(I)

worin

R den Rest eines Oligomeren und/oder Polymeren mit mindestens drei seitlich angeordneten OH-Gruppen,
$R^1$ den Rest einer mindestens dreibasischen, zur inneren Anhydridbildung befähigten Carbonsäure,
$R^2$ eine Gruppierung >O und/oder zwei freie OH-Reste oder einen $C_{1-18}$-Alkoxy- und einen OH-Rest, wobei die an den Rest $R^2$ gebundenen CO-Gruppen zueinander orthoständig bzw. durch peri-Stellung zur Anhydridbildung befähigt sind, und wobei $R^1$, $R^2$ und $R^3$ innerhalb eines Moleküls auch verschiedene dieser Bedeutungen haben können,
$R^3$ den Rest einer mindestens zweiwertigen Carbonsäure, wobei $R^3$ dieselbe Bedeutung wie $R^1$ haben kann,

bedeuten und wobei in obiger Formel in mindestens einer der beiden Seitenketten mit $R^1$ und, falls $R^3$ den Rest einer mindestens dreiwertigen Carbonsäure bedeutet, auch in mindestens einer der Seitenketten mit demjenigen C-Atom, das der Esterbindung mit R benachbart ist oder in peri-Stellung dazu steht, eine —COOH-Gruppe stehen kann, die ihrerseits zur Bildung einer weiteren intramolekularen Anhydridgruppe befähigt ist, wobei in obiger Formel die den Rest $R^3$ bildende Carbonsäure dreiwertig dargestellt ist, aber auch zwei oder höherwertig sein kann.

2. Verbindungen nach Anspruch 1, dadurch gekennzeichnet, daß der Rest $R^1$ den Rest einer dreibasischen Carbonsäure darstellt und daß die an den Rest $R^2$ gebundene CO-Gruppe nicht in ortho- oder peri-Stellung zur Esterbindung am Rest R steht.

3. Verfahren zur Herstellung von Esterverbindungen gemäß Formel I durch Umsetzung von Oligomeren und/oder Polymeren mit mindestens drei freien, seitlich angeordneten alkoholischen OH-Gruppen, mit mindestens dreiwertigen Carbonsäurekomponenten, dadurch gekennzeichnet, daß mindestens eine zur inneren Anhydridbildung befähigte mindestens dreiwertige Carbonsäurekomponente allein oder zusammen mit einer mindestens zweiwertigen Carbonsäurekomponente mit einem freie OH-Gruppen aufweisenden Oligomeren bzw. Polymeren R unter Bildung einer oligomeren bzw. polymeren Verbindung der Formel (I), worin R, $R^1$, $R^2$ und $R^3$ die im Anspruch 1 angegebene Bedeutung haben, unter Entfernung des sich bildenden Reaktionswassers oder anderen flüchtigen Reaktionsprodukten umgesetzt wird, worauf das Produkt als solches isoliert oder anschließend einer zumindest teilweisen Hydrolyse und/oder Veresterung von vorhandenen Anhydridgruppen unterzogen wird.

4. Verfahren nach Anspruch 3, dadurch gekennzeichnet, daß Trimellithsäure oder deren Anhydrid umgesetzt wird.

5. Verfahren nach Anspruch 3 oder 4, dadurch gekennzeichnet, daß ein Homo- und/oder Copolymerisat von Acryl- und/oder Methacrylsäurehydroxyalkylester als OH-Gruppen enthaltendes Polymeres umgesetzt wird, wobei der Anteil der anderen Monomeren ohne OH-Gruppen im Copolymerisat bis zu 90 Gew.-% beträgt.

6. Verfahren nach einem oder mehreren der Ansprüche 3 bis 5, dadurch gekennzeichnet, daß die Polymerisation des Oligomeren, bzw. Polymeren R — sofern es ein echtes Polymerisat ist — in einer Stufe mit dem Einbau der Polycarbonsäuregruppen unter mindestens teilweisen Veresterung der Seitengruppen durchgeführt wird.

7. Verfahren nach einem oder mehreren der Ansprüche 3 bis 5, dadurch gekennzeichnet, daß die Säurekomponente vorgelegt und die OH-Gruppen enthaltende Komponente anteilweise zugegeben wird.

8. Verfahren nach einem oder mehreren der Ansprüche 3 bis 7, dadurch gekennzeichnet, daß bei einer Temperatur von 150 bis 270, vorzugsweise 180 bis 240° C gearbeitet wird.

9. Verfahren nach einem oder mehreren der Ansprüche 3 bis 8, dadurch gekennzeichnet, daß die Umsetzung in Gegenwart eines Veresterungskatalysators in Form von Metallsalzen, vorzugsweise Alkali- und/oder Erdalkalisalzen, erfolgt.

10. Verwendung der Verbindung nach Anspruch 1 bzw. der nach dem Verfahren gemäß einem oder mehreren der Ansprüche 3 bis 9 hergestellten Produkte als Härter für härtbare Verbindungen mit freien Epoxyd-, Amin- und/oder OH-Gruppen, insbesondere für pulverförmige kalt- und wärmehärtbare Beschichtungsmischungen.

**Patentansprüche für den Vertragsstaat: AT**

1. Verfahren zur Herstellung von Verbindungen der Formel

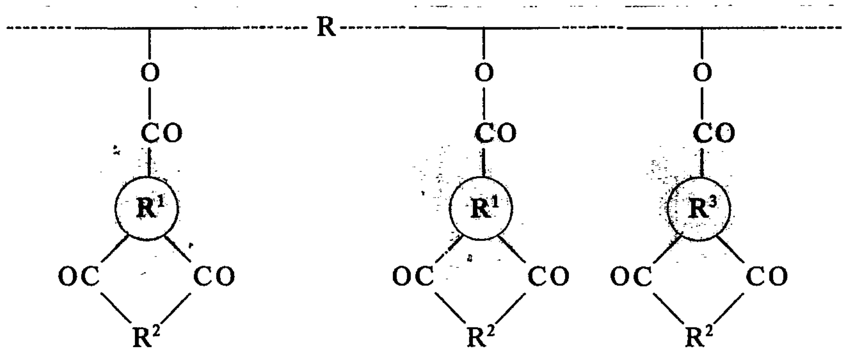

(I)

durch Umsetzung von Oligomeren und/oder Polymeren mit mindestens drei freien seitlich angeordneten alkoholischen OH-Gruppen, mit mindestens dreibasischen Polycarbonsäurekomponenten, dadurch gekennzeichnet, daß mindestens eine zur inneren Anhydridbildung befähigte mindestens dreibasische Polycarbonsäurekomponente allein oder zusammen mit einer mindestens zweibasischen Carbonsäurekomponente mit einem freie OH-Gruppen aufweisenden Oligomeren bzw. Polymeren R unter Bildung einer oligomeren bzw. polymeren Verbindung der Formel (I), worin

R den Rest eines Oligomeren und/oder Polymeren mit mindestens drei freien, seitlich angeordneten OH-Gruppen,

$R^1$ den Rest einer mindestens dreibasischen, zur inneren Anhydridbildung befähigten Polycarbonsäure,

$R^2$ eine Gruppierung $>O$ und/oder zwei freie OH-Reste oder einen $C_{1-18}$-Alkoxy- und einen OH-Rest, wobei die an den Rest $R^2$ gebundenen CO-Gruppen zueinander orthoständig bzw. durch peri-Stellung zur Anhydridbildung befähigt sind, und wobei $R^1$, $R^2$ und $R^3$ innerhalb eines Moleküls auch verschiedene dieser Bedeutungen haben können,

$R^3$ den Rest einer mindestens zweiwertigen Carbonsäure, wobei $R^3$ auch dieselbe Bedeutung wie $R^1$ haben kann,

bedeuten und wobei in obiger Formel in mindestens einer der beiden Seitenketten mit $R^1$ und, falls $R^3$ den Rest einer mindestens vierwertigen Carbonsäure bedeutet, auch in mindestens einer der Seitenketten mit $R^3$ an demjenigen C-Atom, das der Esterbindung mit R benachbart ist oder in peri-Stellung dazu steht, eine $-COOH$-Gruppe stehen kann, die ihrerseits zur Bildung einer weiteren intramolekularen Anhydridgruppe befähigt ist, wobei in obiger Formel die den Rest $R^3$ bildende Carbonsäure dreiwertig dargestellt ist, aber auch zwei- oder höherwertig sein kann, unter Entfernung von sich bildenden Reaktionswassers umgesetzt wird, worauf das Produkt als solches isoliert oder einer zumindest teilweisen Hydrolyse und/oder Veresterung von vorhandenen Anhydridgruppen unterzogen wird.

2. Verfahren nach Anspruch 1, dadurch gekennzeichnet, daß der Rest $R^1$ eine dreiwertige Polycar-

bonsäure darstellt und daß die an den Rest $R^2$ gebundenen CO-Gruppen nicht in ortho- oder peri-Stellung zur Esterbildung an Rest R steht.

3. Verfahren nach Anspruch 1 oder 2, dadurch gekennzeichnet, daß Trimellithsäure umgesetzt wird.

4. Verfahren nach einem oder mehreren der Ansprüche 1 bis 3, dadurch gekennzeichnet, daß ein Homo- und/oder Copolymerisat von Acryl- und/oder Methacrylsäurehydroxyalkylester als OH-Gruppen enthaltendes Polymeres umgesetzt wird, wobei der Anteil der anderen Monomeren ohne OH-Gruppen im Copolymerisat bis zu 90 Gew.-% beträgt.

5. Verfahren nach einem oder mehreren der Ansprüche 1 bis 4, dadurch gekennzeichnet, daß die Polymerisation des Oligomeren bzw. Polymeren R — sofern es ein echtes Polymerisat ist — in einer Stufe mit dem Einbau der Polycarbonsäuregruppen und einer mindestens teilweisen Veresterung der Seitengruppen durchgeführt wird.

6. Verfahren nach einem oder mehreren der Ansprüche 1 bis 4, dadurch gekennzeichnet, daß die Säurekomponente vorgelegt und die OH-Gruppen enthaltende Komponente anteilweise zugegeben wird.

7. Verfahren nach einem oder mehreren der Ansprüche 1 bis 6, dadurch gekennzeichnet, daß bei einer Temperatur von 150 bis 270, vorzugsweise 180 bis 240° C gearbeitet wird.

8. Verfahren nach einem oder mehreren der Ansprüche 1 bis 7, dadurch gekennzeichnet, daß die Umsetzung in Gegenwart eines Veresterungskatalysators in Form von Metallsalzen, vorzugsweise Alkali- und/oder Erdalkalisalzen erfolgt.

9. Verfahren nach einem oder mehreren der Ansprüche 1 bis 8, dadurch gekennzeichnet, daß eine Verbindung der Formel (I) hergestellt wird, in der zumindest ein Teil der Säuren in den Seitengruppen in Form eines Halbesters vorliegt.

**Claims for the Contracting states: CH, LI, DE, GB, NL**

1. An ester compound of the formula

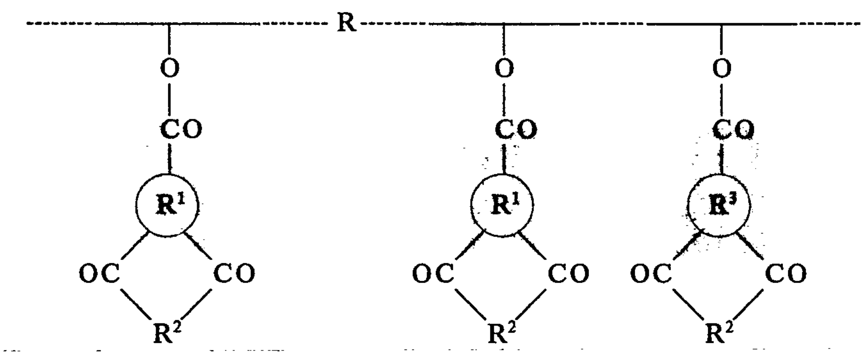

(I)

in which

R denotes the radical of an oligomer and/or polymer having at least 3 free lateral OH groups,
$R^1$ denotes the radical of an at least tribasic carboxylic acid capable of internal anhydride formation,
$R^2$ denotes the group $>O$ and/or two free OH radicals or a combination of a $C_{1-18}$-alkoxy radical and an OH radical, where the CO groups bonded to the radical $R^2$ are in ortho- or peri-position relative to each other so that they are capable of anhydride formation, and in which $R^1$, $R^2$ and $R^3$ within a molecule can also have various of these meanings,
$R^3$ denotes the radical of an at least dibasic carboxylic acid and can also have the same meaning as $R^1$,

and in which in the above formula in at least one of the two side chains containing $R^1$ and if $R^3$ denotes the radical of an at least tribasic carboxylic acid, also at least one of side chains containing $R^3$ can contain a —COOH group at the carbon atom adjacent to or in periposition relative to the ester bond with R, which is capable of formation a further intramolecular anhydride group and whereby in the above formula the radical $R^3$ is demonstrated as a tribasic carboxylic acid which can also be dibasic or have a higher basicity.

2. A compound according to claim 1, characterized in that the radical $R^1$ represents a radical of a tribasic carboxylic acid and that the CO-group bonded to the radical $R^2$ is not in ortho- or peri-position relative to the ester bond on the radical R.

3. A process for preparation of an ester compound according to formula I by reacting oligomers and/or polymers having at least three free lateral alcoholic OH-groups with at least tribasic carboxylic acid components characterized in that at least one tribasic carboxylic acid component, capable of internal anhydride formation, alone or together with an at least dibasic carboxylic acid component is

reacted with an oligomer or polymer R, having free OH-groups while removing water or other volatile products of reaction which are formed, under formation of an oligomeric or polymeric compound of the formula (I) in which R, $R^1$, $R^2$ and $R^3$ have the meaning as mentioned as in claim 1, isolating the formed product as such or subjecting this product at least partially to hydrolysis and/or esterification of the present anhydride groups.

4. Process according to claim 3, characterized in that trimellitic acid or its anhydride is reacted.

5. Process according to claim 3 or 4, characterized in that a homopolymer and/or copolymer of a hydroxyalkyl ester of acrylic and/or methacrylic acid is reacted as an polymer having OH groups, wherein the amount of other monomers having no OH groups in the copolymer is up to 90% by weight.

6. Process according to one or more of claims 3 to 5, characterized in that the polymerization of the oligomer or of the polymer R — provided it is a genuine polymer — is effected in one stage together with the incorporation of the polycarboxylic acid groups under an at least partial esterification of the side groups.

7. Process according to one or more of claims 3 to 5, characterized in that the acid component is initially introduced and the OH-groups containing component is added gradually.

8. Process according to one or more of claims 3 to 7, characterized in that the reaction is carried out at a temperature of from 150 to 270, preferably 180 to 240° C.

9. Process according to one or more of claims 3 to 8, characterized in that the reaction is carried out by an esterification catalyst in the form of metal salts, preferabl alkali metal and/or alkaline earth metal salts.

10. Use of the compound according to claim 1 or of the products prepared by the process according to one or more of claims 3 to 9 as hardener for hardenable compounds having free epoxide, amine and/or OH groups, in particular for a pulverulant cold and heat hardenable coating mixture.

**Claims for the contracting state: AT**

1. A. process for the preparation of compounds of the formule

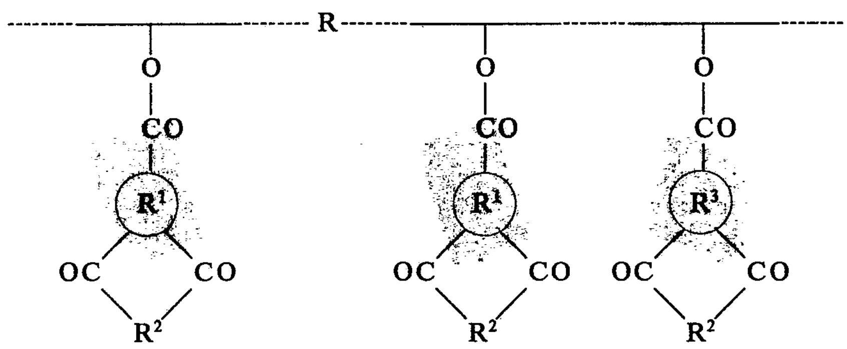

(I)

by reacting oligomers and/or polymers having at least three free lateral alcoholic OH-groups with at least tribasic carboxylic acid components characterized in that at least one tribasic carboxylic acid component, capable of internal anhydride formation, alone or together with an at least dibasic carboxylic acid component is reacted with an oligomer or polymer R, having free OH-groups under formation of an oligomeric or polymeric compound of the formula I, in which

R denotes the radical of an oligomer and/or polymer having at least 3 free lateral OH groups,
$R^1$ denotes the radical of an at least tribasic carboxylic acid capable of internal anhydride formation,
$R^2$ denotes the group >O and/or two free OH radicales or a combination of a $C_{1-18}$-alkoxy radical and an OH radical, where the CO groups bonded to the radical $R^2$ are in ortho- or peri-position relative to each other so that they are capable of anhydride formation, and in which $R^1$, $R^2$ and $R^3$ within a molecule can also have various of these meanings,
$R^3$ denotes the radical of an at least dibasic carboxylic acid and can also have the same meaning as $R^1$,

and in which in the above formula in at least one of the two side chains containing $R^1$ and if $R^3$ denotes the radical of an at least tribasic carboxylic acid, also at least one of side chains containing $R^3$ can contain a —COOH group at the carbon atom adjacent to or in peri-position relative to the ester bond with R, which is capable of formation a further intramolecular anhydride group and whereby in the above formula the radical $R^3$ is demonstrated as a tribasic carboxylic acid which can also be dibasic or have a higher basicity, while removing reaction water formed, isolating the formed product as such or subjecting this product at least partially to hydrolysis and/or esterification of the present anhydride groups.

2. A compound according to claim 1, characterized in that the radical $R^1$ represents a radical of a tribasic carboxylic acid and that the CO-group bonded to the radical $R^2$ is not in ortho- or peri-position relative to the ester bond on the radical R.

3. Process according to claim 1 or 2, characterized in that trimellith acid is reacted.

4. Process according to one or more of claims 1 to 3, characterized in that a homopolymer and/or copolymer of a hydroxyalkyl ester of acrylic and/or methacrylic acid is reacted as an polymer having OH groups, wherein the amount of other monomers having no OH groups in the copolymer is up to 90% by weight.

5. Process according to one or more of claims 1 or 4, characterized in that the polymerization of the oligomer or of the polymer R — provided it is a genuine polymer — is effected in one stage together with the incorporation of the polycarboxylic acid groups under an at least partial esterification of the side groups.

6. Process according to one or more of claims 1 to 4, characterized in that the acid component is initially introduced and the OH-groups containing component is added gradually.

7. Process according to one or more of claims 1 to 6, characterized in that the reaction is carried out at a temperature of from 150 to 270, preferably 180 to 240° C.

8. Process according to one or more of claims 1 to 7, characterized in that the reaction is carried out by an esterification catalyst in the form of metal salts, preferably alkali metal and/or alkaline earth metal salts.

9. Process according to one or more of claims 1 to 8, characterized in that a compound of the formula (I) is prepared in which at least parts of the acids are present in the side groups in the form of the semi ester.

**Revendications: pour les Etats contractants: CH, LI, DE, GB, NL**

1. Composés d'esters répondant à la formule

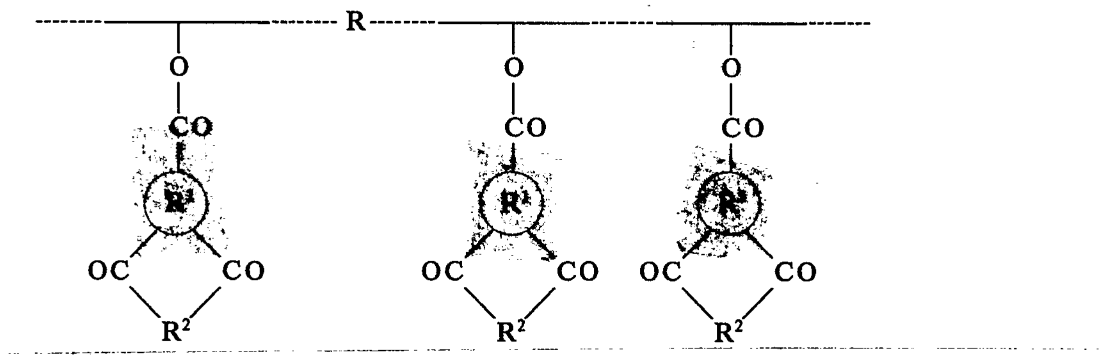

(I)

dans laquelle

R désigne le reste d'un oligomère et/ou d'un polymère ayant du moins trois groupes OH libres latéraux,

$R^1$ désigne le reste d'un acide au moins tricarboxylique capable de former des groupes anhydrides internes,

$R^2$ désigne un groupement $>O$ et/ou deux groupes OH libres ou un groupe alcoxy en $C_{1-18}$ et un groupe OH, les groupes CO liés au radical $R^2$ étant en position ortho l'un par rapport à l'autre ou étant capable de former des groupes anhydrides par position péri et $R^1$, $R^2$ et $R^3$, à l'intérieur d'une molécule, pouvant également avoir de différentes significations parmi celles figurant ci-dessus,

$R^3$ désigne le reste d'un acide carboxylique au moins bivalent, $R^3$ pouvant également avoir la même signification que $R^1$,

et dans la formule ci-dessus un groupe —COOH pouvant se trouver au moins dans l'une des deux chaînes latérales avec $R^1$ et, lorsque $R^3$ désigne le reste d'un acide au moins trivalent, également au moins dans une des chaînes latérales avec $R^3$, à l'atome de carbone voisin de la liaison ester avec R ou en position péri par rapport à celle-ci, cette group —COOH, de son côté, étant également capable de former un groupe anhydride intramoléculaire, l'acide carboxylique constituant le radical $R^3$ dans la formule ci-dessus étant représenté comme acide trivalent, mais pouvant également être un acide bivalent ou avoir une valence supérieure.

2. Composés selon la revendication 1, caractérisé en ce que le radical $R^1$ représente le reste d'un acide tricarboxylique et que le groupe CO lié au radical $R^2$ ne se trouve ni en position ortho ni en position péri par rapport à la liaison ester au radical R.

3. Procédé de préparation de composés d'esters répondant à la formule I par réaction d'oligomères et/ou de polymères ayant au moins trois groupes OH alcooliques libres latéraux, avec des composantes d'acide carboxylique au moins trivalentes, caractérisé en ce que l'on fait réagir au moins une composante d'acide carboxylique au moins trivalente capable de former un groupe anhydride interne, seule ou avec une composante d'acide carboxylique au moins bivalente, avec un oligomère ou un polymère R à groupes OH libres pour obtenir un composé oligomère ou polymère de formule I, dans laquelle R, $R^1$, $R^2$ et $R^3$ ont la signification donnée à la revendication 1, avec élimination de l'eau engendrée par la réaction ou d'autres produits réactionnels volatils, on isole le produit tel quel ou on le soumet ensuite à une hydrolyse au moins partielle et/ou à une estérification des groupes anhydrides présents.

4. Procédé selon la revendication 3, caractérisé en ce que l'on fait réagir l'acide triméllithique ou son anhydride.

5. Procédé selon l'une des revendications 3 ou 4, caractérisé en ce qu'on met en jeu un homopolymère et/ou un copolymère d'un ester hydroxyalkylique de l'acide acrylique et/ou méthacrylique comme polymère à groupes OH, la proportion des monomères sans groupes OH dans le copolymère allant jusqu'à 90% en poids.

6. Procédé selon une ou plusieures des revendications 3 à 5, caractérisé en ce que l'on effectue la polymérisation de l'oligomère ou du polymère R, s'il s'agit d'un véritable polymère, en une étape avec l'incorporation des groupes polycarboxyliques accompagnée d'une esterification au moins partielle des groupes latéraux.

7. Procédé selon une ou plusieures des revendications 3 à 5, caractérisé en ce que l'on place d'abord la composante d'acide et on y ajoute par portions la composante contenant les groupes OH.

8. Procédé selon une ou plusieures des revendications 3 à 7, caractérisé en ce qu'on opère à une température de 150 à 270, de préférence de 180 à 240° C.

9. Procédé selon une ou plusieures des revendications 3 à 8, caractérisé en ce que la réaction s'effectue en présence d'un catalyseur d'estérification sous forme de sels de métaux, de préférence des sels de métaux alcalins et/ou alcalino-terreux.

10. Utilisation du composé selon la revendication 1 ou des produits préparés selon le procédé conformément à une ou plusieurs des revendications 3 à 9 comme durcisseurs pour des compoés durcissables renfermant des groupes époxydes, amines et/ou OH libres, en particulier pour des mélanges de recouvrement pulvérulants durcissablesà froid et à chaud.

**Revendications pour l'Etat contractant: AT**

1. Procédé de préparation de composés de formule

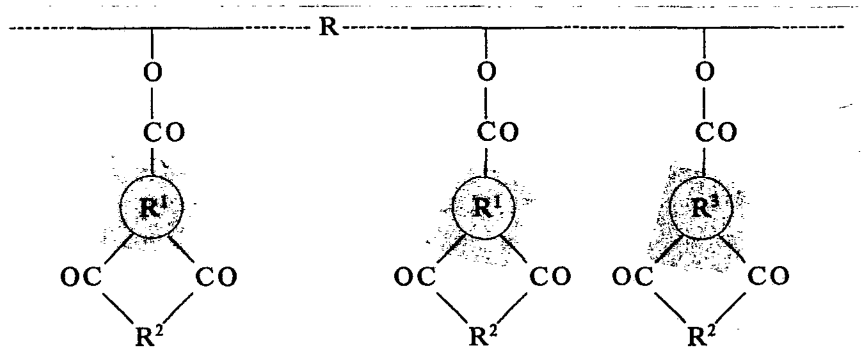

(I)

par réaction d'oligomères et/ou de polymères ayant au moins trois groupes OH alcooliques libres latéraux, avec des composantes d'acide polycarboxylique au moins trivalentes, caractérisé en ce que l'on fait réagir au moins une composante d'acide carboxylique au moins trivalente capable de former un groupe anhydride interne, seule ou avec une composante d'acide polycarboxylique au moins bivalente, avec un oligomère ou un polymère R à groupes OH libres pour obtenir un composé oligomère ou polymère de formule I, dans laquelle

R désigne le reste d'un oligomère et/ou d'un polymère ayant au moins trois groupes OH libres latéraux,

$R^1$ désigne le reste d'un acide polycarboxylique au moins tribasique capable de former des groupes anhydrides internes,

$R^2$ désigne un groupement >O et/ou deux groupes OH libres ou un groupe alcoxy en $C_{1-18}$ et un groupe OH, les groupes CO liés au radical $R^2$ étant en position ortho l'un par rapport à l'autre ou étant capable de former des groupes anhydrides par position péri et $R^1$, $R^2$ et $R^3$, à l'intérieur d'une molécule, pouvant également avoir de différentes significations parmi celles figurant ci-dessus,

$R^3$ désigne le reste d'un acide carboxylique au moins bivalent, $R^3$ pouvant également avoir la même signification que $R^1$,

et dans la formule ci-dessus un groupe —COOH pouvant se trouver au moins dans l'une des deux chaînes latérales avec $R^1$ et, lorsque $R^3$ désigne le reste d'un acide au moins tétravalent, également au moins dans une des chaînes latérales avec $R^3$, à l'atome de carbone voisin de la liaison ester avec R ou en position péri par rapport à celle-ci, cette group —COOH, de son côté, étant également capable de former un groupe anhydride intramoléculaire, l'acide carboxylique constituant le radical $R^3$ dans la formule ci-dessus étant représenté comme acide trivalent, mais pouvant également être un acide bivalent ou avoir une valence supérieure, avec élimination de l'eau engendrée par la réaction, après quoi on isole le produit tel quel ou on le soumet à une hydrolyse au moins partielle et/ou à une estérification des groupes anhydrides présents.

2. Procédé selon la revendication 1, caractérisé en ce que le radical $R^1$ représente un acide polycarboxylique trivalent et que les groupes CO liés au radical $R^2$ ne se trouvent ni en position péri par rapport à la liaison ester au radical R.

3. Procédé selon l'une des revendications 1 ou 2, caractérisé en ce que l'on fait réagir l'acide triméllithique.

Procédé selon l'une des revendications 1 ou 2, caractérisé en ce que l'on fait réagir l'acide triméllithique.

4. Procédé selon une ou plusieures des revendications 1 à 3, caractérisé en ce que l'on fait réagir, l'acide triméllithique ou son anhydride.

5. Procédé selon l'une des revendications 3 ou 4, caractérisé en ce qu'on met en jeu un homopolymère et/ou un copolymère d'un ester hydroxyalkylique de l'acide acrylique et/ou méthacrylique comme polymère à groupes OH, la proportion des monomères sans groupes OH dans le copolymère allant jusqu'à 90% en poids.

6. Procédé selon une ou plusieures des revendications 3 à 5, caractérisé en ce que l'on effectue la polymérisation de l'oligomère ou du polymère R, s'il s'agit d'un véritable polymère, en une étape avec l'incorporation des groupes polycarboxyliques accompagnée d'une esterification au moins partielle des groupes latéraux.

7. Procédé selon une ou plusieures des revendications 3 à 5, caractérisé en ce que l'on place d'abord la composante d'acide et on y ajoute par portion la composante contenant les groupes OH.

8. Procédé selon une ou plusieures des revendications 3 à 7, caractérisé en ce qu'on opère à une température de 150 à 270, de préférence de 180 à 240° C.

9. Procédé selon une ou plusieures des revendications 1 à 8, caractérisé en ce qu'one prépare un composé de formule I, dans lequel au moins une partie des acides dans les chaînes latérales etst sous la forme d'un semi-ester.